Europäisches Patentamt

European Patent Office

Office européen des brevets

(19)

(11) Publication number: **0 042 708**
**B1**

(12) EUROPEAN PATENT SPECIFICATION

(45) Date of publication of patent specification: **26.02.86**

(51) Int. Cl.⁴: **D 06 F 37/20**

(21) Application number: **81302643.2**

(22) Date of filing: **15.06.81**

(54) Oscillation damping arrangement.

(30) Priority: **23.06.80 GB 8020487**

(43) Date of publication of application:
**30.12.81 Bulletin 81/52**

(45) Publication of the grant of the patent:
**26.02.86 Bulletin 86/09**

(84) Designated Contracting States:
**DE FR IT**

(56) References cited:
**DE-A-1 675 156**
**DE-A-2 406 144**
**DE-B-1 211 555**
**FR-A-1 408 824**
**FR-A-1 468 435**
**FR-A-2 013 990**
**FR-A-2 376 242**
**GB-A-1 355 177**
**US-A-3 729 960**

(73) Proprietor: **HOTPOINT LIMITED**
**Peterborough PE2 9JB (GB)**

(72) Inventor: **Hargreaves, Robert Edward**
**78 Blackmead**
**Orton Melborne Peterborough (GB)**

(74) Representative: **Kirby, Harold Victor Albert**
**Central Patent Department Wembley Office The**
**General Electric Company, p.l.c. Hirst Research**
**Centre East Lane**
**Wembley Middlesex HA9 7PP (GB)**

Courier Press, Leamington Spa, England.

## Description

This invention relates to arrangements for damping oscillations occurring between two relatively movable bodies, more especially for damping oscillations of a body resiliently by a support, and has particular application to washing machines of the kind incorporating a cabinet resiliently supporting within it a drum unit, comprising a perforated drum mounted for rotation about a generally horizontal axis within an outer container.

In use of such a washing machine it is usual for the drum to be rotated alternatively in opposite directions, to produce a movement of clothes through a washing or rinsing liquid in the outer container, and unidirectionally at a relatively high spin speed with the container emptied, in order to extract moisture from the clothes by centrifugal action.

In some cases, however, for example due to bunching of clothes within the drum, large oscillations of the drum unit can occur as the drum is accelerated up to spin speed particularly within a critical speed range. In order to reduce such vibrations damping means are commonly provided, but if these are made effective to damp large oscillations, small oscillations which occur due to slight imbalances tend to be transmitted to the cabinet of the machine which is clearly undesirable.

Such damping means are known from for example French document FR—A—2,013,990 and U.S. Patent US—A—3,729,960. The French patent discloses the use of leaf springs to resiliently support the drum unit and a piston arrangement surrounded by a compression spring to damp oscillations. The U.S. Patent also discloses leaf springs for supporting the drum unit, the leaf springs having a free end on which dampening means are attached. However both of the cases are only concerned with damping large oscillations.

To damp both small and large oscillations it is known from German Auslegschrift DE—B—1211555 to provide a damping piston-tube arrangement, to damp large oscillations, connected to a lever arrangment to take up the initial small movement of the drum unit but this system is complicated due to the lever arrangement.

A more effective system used to damp both large and small oscillations in a washing machine is disclosed in German Offenlegungsschrift DE—A—2406144 in which there is disclosed an arrangement in which a rod extends through a "piston" which makes contact with the inner wall of a cylinder via a friction lining. In this case small scillations produce movement between the leg and the piston but once these exceed a limit set by stops, use of the heavy friction surfaces is brought about. Such a device is, however, complicated and hence expensive to manufacture.

An object of the present invention, therefore, is to provide a form of damping arrangement which serves to provide effective damping of both small and larger oscillations and which is more readily constructed and assembled and consequently cheaper than the previously known arrangements.

Accordingly, the invention provides an arrangement for damping oscillations between two relatively moveable bodies in which the bodies are associated with members having frictional surfaces which engage each other in a manner such that small movements between the bodies are lightly damped and greater movements more heavily damped, and in which a first said member associated with one of the bodies comprises a bar or rod which extends through a second member associated with the other body to provide a light damping, and in which a third member is supported in frictional engagement with one of the two members so that it can move therewith, but whose degree of movement is limited by stops carried by the other of the two members, so that it then provides a heavier damping, and is characterised in that the second member 5 is in the form of a single element made in one piece and comprises two spaced parallel walls 11, 12 formed with openings and joined by a third wall, the first member extends through the openings in the spaced walls 11, 12 so that its surface is in frictional contact therewith to provide said light damping, and the third member 6 is in the form of a collar which is supported by and moves with the first member 3 between the spaced walls of the second member, the latter providing said stops which limit the degree of movement of the latter, the frictional engagement of the third member with the first member then providing said heavier damping. It will be seen that each of the members has only one frictional surface so that only three frictional surfaces are required in total.

The expression "associated with" as applied to the first and second members in the above statement of the invention means that relative movement of the bodies results in a corresponding relative movement of the members. A member may, for example, be physically attached to the respective body, or it may support or be supported by the respective body so as to be retained in contact with it by gravity or other means.

In an arrangement in accordance with the invention oscillations of less than a predetermined amplitude between the bodies will be damped by the frictional force between the first and second members, but oscillations of sufficient amplitude to cause the movement of the third member to be arrested by the stop means will result in an additional frictional force being exerted by the third member, thus enhancing the damping effect.

The invention is especially applicable to apparatus, such as rotary washing machines, in which a body which is subject to oscillations in use is resiliently mounted on a support.

In such an arrangement the second member can be arranged to exert only a relatively light frictional force on the first member, such that small oscillations of the body are not transmitted to any significant extent to the support, whilst the frictional force exerted by the third member can be made to be substantially greater to ensure effective damping of large oscillations.

Shock absorbing pads, of a suitably soft material, such as a high hysteresis rubber-like material, for example SORBOTHANE manufactured by Sorbo Industrial Polymers Limited, of Sorbo Works, Albert Drive, Sheerwater, Woking, England, may be interposed between the third member and the stop means to reduce shock and consequent noise when large oscillations occur.

Means can in some cases be provided for adjusting the frictional force exerted between the second and/or third members on the first member.

Conveniently the first member is in the form of a bar or rod extending through the second member, the latter·having two relatively spaced sections, with the third member supported by the first member between the spaced sections of the second member, which thereby provide the said stop means.

The amplitude of the oscillations at which the third member becomes effective is thus determined by the length of the third member and the spacing of the two sections of the second member, and these dimensions can readily be chosen, together with the degrees of frictional force exerted to suit any particular application of the invention.

In the case of a washing machine the first member may be in the form of a rod fixed to the drum unit, with the second member supported by the base of the washing machine cabinet. Preferably the rod is secured to the drum unit by a resilient clamping means in a manner which allows the rod to pivot to a limited extent in all directions relative to the unit. In such a case the second member is conveniently also supported by the base of the washing machine cabinet in a manner which allows a degree of universal movement. Although the second support member may be similarly secured to the base by a resilient clamping means it can be alternatively supported by a spherical seating, giving a required degree of universal movement.

Conveniently a damping arrangement is incorporated into a resilient strut which provides a support for the drum unit from the cabinet base, the rod in such a case being surrounded by a compression spring acting between the drum unit and the second damping member.

However means such as leaf springs may alternatively be used for providing a resilient support for the drum unit if desired, and in some cases the spring may be in the form of a C-spring an end of which is extended to form said first member of the damping arrangment.

The drum unit may be supported by different members of combined resilient supports and damping arrangments, for example one, two, three or four, as may be convenient.

Two embodiments of the invention will now be described by way of example with reference to Figures 1 to 3 of the accompanying drawings, in which

Figure 1 represents in part section of a front elevation of a washing machine incorporating one damping arrangement in accordance with the invention,

Figure 2 shows the damping arrangement in more detail, and

Figure 3 illustrates an alternative damping arrangement for a washing machine.

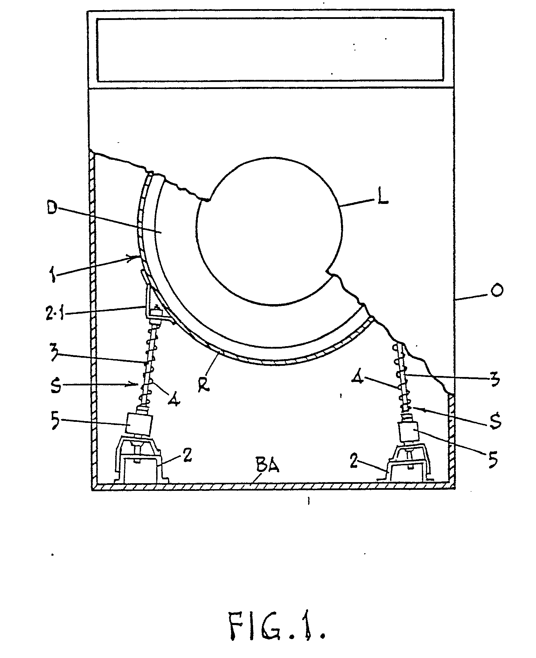

Referring first to Figure 1, this shows diagrammatically a washing machine comprising an outer cabinet O supporting within it a drum unit 1, the latter incorporating a perforated drum D rotatable about a horizontal axis within a container R. The drum is open at its front end and the cabinet is providing with a loading opening L for introducing clothes into and removing them from the drum, the loading opening being closeable by a door (not shown).

In use of the machine the drum is arranged to be rotated alternately in opposite directions at a relatively low speed, with a quantity of liquid in the container R, for washing or rinsing the clothes, and unidirectionally at a relatively high spin speed, with the container emptied, for extracting moisture from the clothes by centrifugal action.

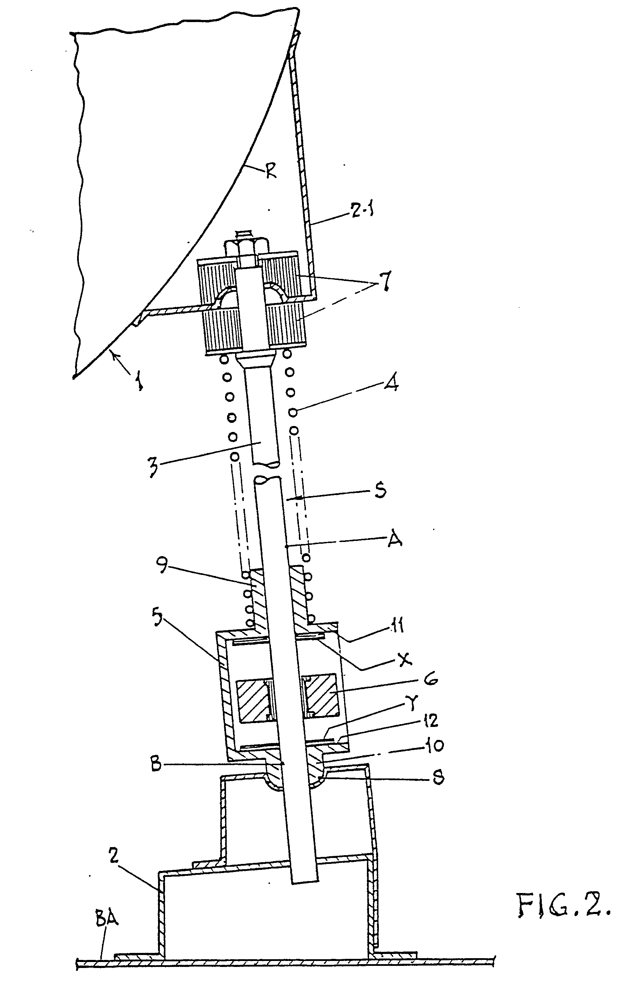

The drum unit 1 is supported within the cabinet by two or more resilient support elements S one of which is shown in more detail in Figure 2. Each support element extends between a bracket 2 carried by the base BA of the cabinet O and a further bracket 2.1 fixed to the container of the drum unit 1, and comprises a rod 3 surrounded by a compression spring 4 and a damper housing 5.

The rod is resiliently secured at its upper end to the bracket 2.1 by means of two rubber mounting blocks 7 clamped one each side of the bracket 2.1 as shown, which permits the rod to pivot to a limited extent in all directions relative to the bracket, and the damper housing 5 bears on the base bracket 2 via a spherical seating 8, which also allows a degree of universal movement between the housing and the base, the spring 4, which extends between the lower of the two mounting blocks 7 and the damper housing, providing a resilient support for the drum unit 1.

The damper housing 5 is in the form of a hollow box-like structure having outwardly extending projections 9, 10 on its upper and lower walls 11, 12 respectively. The upper projection 9 being surrounded by the lower end of the spring 4, and the lower end of the lower projection 10 being of part spherical shape and resting within the spherical seating 8. The projections 9, 10 are apertured for the passage of the rod 3 and are such that they frictionally engage the rod 3, which has the effect of damping oscillations which occur between the drum unit 1 and the cabinet O.

In addition the rod 3 carries within the damper housing 5 a secondary damping element 6 in the form of a collar which also frictionally engages the rod. Pads X, Y of a high hysteresis rubber-like material, such as SORBOTHANE manufactured by Sorbo Industrial Polymers Limited are interposed between the damping element 6 and the upper and lower walls 11, 12 of the damper housing 5, for example by attachment to the inner surfaces of the walls as shown or to the upper and lower surfaces of the element itself.

In use of the machine, should large oscillations of the drum unit 1 occur, damping is achieved in two ways. Primary damping is effected by friction at points A and B by contact between the rod 3 and the projections 9, 10 on the damper housing 5. Then, if the amplitude of the oscillations exceeds a value determined by the size of the damper housing a secondary damping takes effect in addition to the primary damping. This occurs when the secondary damping element 6, carried by the rod as a result of the frictional engagement between them, is brought into contact with a pad X or Y on the inside face of the upper or lower wall 11, 12 of the damper housing. Thus at each extremity of travel the secondary damper element 6 is caused to move relative to the rod 3 by an amount equal to the overtravel, after the secondary element 6 contacts the respective pad on the wall of the damper housing 5. The purpose of the pads X, Y is to reduce shock and consequent noise which could be caused by the element contacting the walls of the housing directly. Alternatively the pads may be dispensed with where the element 6 itself is of suitably resilient material, and if desired the upper and lower surfaces of the element may be shaped, as by the provion of ridges or other projections, to act as buffers for further reducing noise and shock.

The frictional force between the secondary damper element 6 and the rod 3 is relatively high, so that where the amplitude of oscillation of the rod is large, a large damping force comes into action at each end of its stroke.

However when the machine operates stably, with a relatively small amplitude of oscillation between the rod 3 and the damper housing 5, insufficient to cause the secondary damper 6 to contact the damper housing 5, damping of a relatively light nature is provided by the frictional engagement of the rod in the projections 9, 10.

Such an arrangement gives the optimum damper performance of high damping at a critical speed where large deflections of the drum unit are encountered, and a smaller degree of damping when smaller deflections occur. By this means relatively small oscillations of the drum unit are prevented from being transmitted to any substantial extent to the cabinet O.

The drum unit 1 may be supported from the base BA of the cabinet O by four such support/damper elements S, arranged two at each side of the unit, or alternatively by three such elements disposed one at one side of the unit and two at the other, although in some cases it may be supported by two elements only, disposed one at each side of the unit, approximately in the plane which extends transverse to the axis of the drum through the centre of gravity of the drum unit, means then being provided for supporting the drum unit against any substantial degree of tilting movement.

Although the elements S provide a degree of resilient support for the drum unit assembly as well as damping, these two functions could be separated if desired, the spring 4 being omitted and the resilient support being provided by other means, for example separate suitably positioned spring-loaded struts, or other form of springs.

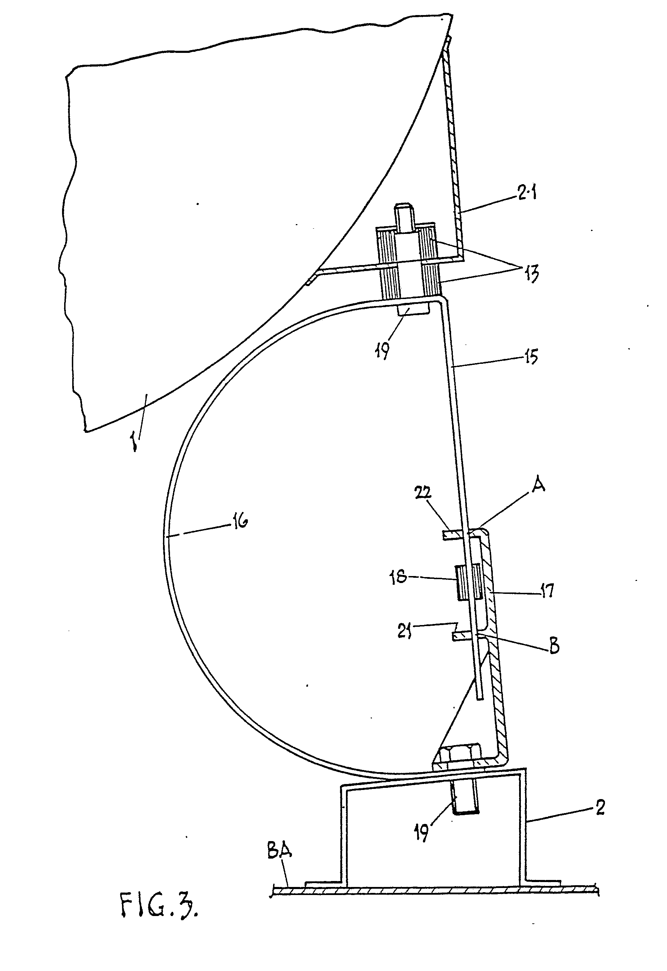

An alternative embodiment of the invention is illustrated in Figure 3, which shows an alternative form of combined resilient support/damper unit S.1 for a washing machine drum unit 1.

Each support/damper unit S.1 again extends between a bracket 2 carried by the base BA of the washing machine cabinet and a further bracket 2.1 fixed to the container of the drum unit 1.

In this case, however, the resilient support is provided by a steel C-spring 16, formed from a flat strip bent to shape, and having the ends of the C fixed by bolts 19 to the respective brackets 2, 2.1. The upper end of the C has a straight downward-projecting extension 15 which extends nearly to the bottom end of the C as shown. There is also attached to the lower bracket 2 an approximately E-shaped damper 17, the lower limb 20 of which is secured to the bracket by the bolt 19 fixing the lower end of the C-spring 16. The extension 15 passes through slots formed in the top and middle limbs 21, 22 of the E-shaped damper and these are arranged to frictionally engage the sides of the extension, which has the effect of providing a relatively light damping of oscillations which occur between the drum unit 1 and the washing machine cabinet. The extension 15 frictionally supports between the limbs 21, 22 of the damper a secondary damping element 18, and this provides relatively heavy secondary damping when the element 18 contacts the faces of either of these two limbs 21, 22 of the damper, which takes place when large vertical amplitudes of vibration of the drum unit 1 occur, such as when the drum of the machine passes through critical speed. This arrangement provides a simplified form of support/damper system using fewer parts than the first embodiment. In particular the need for separate resilient attachments to secure the support/damper unit S1 to the brackets 2, 2.1 is avoided, as the C-spring itself provides lateral stiffness and resistance to tipping. Thus the mounting blocks 13 at the upper end of the C-spring need not in this case be of resilient material.

It will be appreciated that the form of two-stage damping employed may be used to advantage in other forms of machinery subject in use to oscillations which need to be damped.

**Claims**

1. An arrangement for damping oscillations between two relatively movable bodies (0,1) in which the bodies are associated with members having frictional surfaces which engage each other in a manner such that small movements between the bodies are lightly damped and greater movements more heavily damped, and in which a first said member associated with one of the bodies comprises a bar or rod which extends through a second member associated with the other body to provide a light damping, and in which a third member is supported in frictional engagement with one of the two members so that it can move therewith, but whose degree of movement is limited by stops carried by the other of the two members, so that it then provides a heavier damping, and is characterised in that the second member (5) is in the form of a single element made in one piece and comprises two spaced parallel walls (11, 12) formed with openings and joined by a third wall, the first member extends through the openings in the spaced walls (11, 12) so that its surface is in frictional contact therewith to provide said light damping, and the third member (6) is in the form of a collar which is supported by and moves with the first member (3) between the spaced walls of the second member, the latter providing said stops which limit the degree of movement of the latter, the frictional engagement of the third member with the first member then providing said heavier damping.

2. An arrangement according to Claim 1 wherein one of the bodies is provided by a rotatable member (1), and the other body is provided by a support therefor (O).

3. An arrangement according to Claim 2 wherein the second member is arranged to exert only a relatively light frictional force on the first member, such that small oscillations of the body are not transmitted to any significant extent to the support whilst the frictional force exerted by the third member is substantially greater to ensure effective damping of large oscillations.

4. An arrangement according to any preceding Claim wherein one or more shock absorbing pads (X,Y) is/are interposed between the third member and the stop means to reduce shock and consequent noise when large oscillations occur.

5. An arrangement according to any preceding Claim wherein means are provided for adjusting the frictional force exerted between the second and/or third members on the first member.

6. An arrangement according to any preceding Claim wherein the third member is in the form of a collar frictionally supported on said bar or rod.

7. An arrangement according to any preceding Claim wherein the second member is in the form of a hollow box-like structure having outwardly extending projections on two opposing walls through which the first member extends and which form the said relatively spaced sections.

8. An arrangement according to Claims 6 or 7 for a washing machine incorporating a drum unit comprising a perforated drum mounted for rotation about a generally horizontal axis within an outer container, and mounted within a cabinet, wherein the first member is in the form of a rod fixed to the drum unit, with the second member supported by the base of the cabinet.

9. An arrangement according to Claim 8 wherein the rod is secured to the drum unit by a resilient clamping means in a manner which allows the rod to pivot to a limited extent in all directions relative to the unit.

10. An arrangement according to Claim 9 wherein the second member is also supported by the base of the washing machine cabinet in a manner which allows a degree of universal movement.

11. An arrangement according to Claim 10 wherein the second support member is supported on the base of the washing machine by a spherical seating.

12. A washing machine incorporating a damping arrangement according to any preceding Claim.

13. A washing machine incorporating an arrangement according to Claim 1 for damping oscillations between a rotatable member (1) and a support therefor (O), comprising a first member (15) associated with the rotatable member and a second member (17) associated with the support and in frictional engagement with the first member, a third member (18) frictionally supported by the first member, and stop means (21, 22) limiting the degree of travel of the third member relative to said support, wherein the second member is arranged to exert only a relatively light frictional force on the first member, such that small oscillations of the body are not transmitted to any significant extent to the support, whilst the frictional force exerted by the third member is substantially greater to ensure effective damping of large oscillations, characterised in that said rotatable member is resiliently supported by one or more leaf springs (16) wherein at least one of said leaf springs is in the form of a C-spring an end of which is extended to form said first member of said damping arrangement.

**Patentansprüche**

1. Schwingungsdämpfungsvorrichtung zum Dämpfen von Schwingungen zwischen zwei relativ zueinander bewegbaren Körpern (0, 1), die mit Bauteilen mit Reibungsoberflächen verbunden sind, die auf solche Weise in Eingriff miteinander stehen, daß kleine Bewegungen zwischen den Körpern leicht gedämpft und größere Bewegungen stärker werden, wobei ein erstes Bauteil, das mit einem der Körper verbunden ist, einen Stab oder eine Stange aufweist, die sich durch ein zweites Bauteil hindurch erstreckt, das mit dem anderen Körper verbunden ist, um eine leichte Dämpfung hervorzurufen, und wobei ferner ein drittes Bauteil im Reibungseingriff mit einem der beiden anderen Bauteile gehalten ist, so daß es zusammen mit diesem bewegbar ist, während jedoch das Maß der Bewegung durch Anschläge begrenzt ist, die von dem anderen der beiden Bauteile gehalten sind, so daß es dann eine stärkere Dämpfung hervorruft, dadurch gekennzeichnet, daß das zweite Bauteil (5) ein einziges, einstückig hergestelltes Element ist und zwei voneinander beabstandete parallele Wände (11, 12) aufweist, die mit Öffnungen versehen und durch eine dritte Wand verbunden sind, daß das erste Bauteil sich durch die Öffnungen in den beabstandeten Wänden (11, 12) hindurch erstreckt, so daß seine Oberfläche sich damit in Reibungskontakt befindet, um die leichte Dämpfung hervorzurufen, und daß das dritte Bauteil (6) die Form eines Ringes hat, der von dem ersten Bauteil (3) zwischen den beabstandeten Wänden des zweiten Bauteils gehalten ist und sich damit bewegt, wobei die beabstandeten Wände die Anschläge darstellen, die das Maß der Bewegung des dritten Bauteils begrenzen, wobei der Reibungseingriff des dritten Bauteils mit dem ersten Bauteil die stärkere Dämpfung hervorruft.

2. Schwingungsdämpfungsvorrichtung nach Anspruch 1, dadurch gekennzeichnet, daß einer der körper ein drehbares Bauteil (1) und der andere Körper ein dafür vorgesehenes Traggestell (0) ist.

3. Schwingungsdämpfungsvorrichtung nach Anspruch 2, dadurch gekennzeichnet, daß das zweite Bauteil so eingerichtet ist, daß es nur eine relativ geringe Reibungskraft auf das erste Bauteil ausübt, so daß kleine Schwingungen des Körpers nicht im signifikanten Ausmaß auf das Traggestell übertragen werden, während die von dem dritten Bauteil ausgeübte Reibungskraft wesentlich größer ist, um eine wirkungsvolle Dämpfung von großen Schwingungen sicherzustellen.

4. Schwingungsdämpfungsvorrichtung nach einem der vorgergehenden Ansprüche, dadurch gekennzeichnet, daß ein oder mehrere stoßabsorbierende Kissen (X, Y) zwischen dem dritten Bauteil und den Anschlageinrichtungen angeordnet ist/sind, um Stöße und damit verbundene Geräusche zu verringern, wenn große Schwingungen auftreten.

5. Schwingungsdämpfungsvorrichtung nach einem der vorhergehenden Ansprüche, gekennzeichnet durch Einrichtung zum Einstellen der Reibungskraft, die zwischen dem zweiten und/oder dritten Bauteil und dem ersten Bauteil wirkt.

6. Schwingungsdämpfungsvorrichtung nach einem der vorhergehenden Ansprüche, dadurch gekennzeichnet, daß das dritte Bauteil die Form eines Ringes hat, der durch Reibung auf dem Stab oder der Stange gehalten ist.

7. Schwingungsdämpfungsvorrichtung nach einem der vorherigen Ansprüche, dadurch gekennzeichnet, daß das zweite Bauteil eine hohle Kastenform hat mit nach außen sich erstreckenden Vorsprüngen an zwei gegenüberliegenden Wänden, durch die sich das erste Bauteil erstreckt und die die voneinander beabstandeten Abschnitte bilden.

8. Schwingungsdämpfungsvorrichtung nach Anspruch 6 oder 7 für eine Waschmaschine mit einer Trommeleinheit mit einer perforierten Trommel, die innerhalb eines äußeren Behälters um eine allgemein horizontale Achse drehbar befestigt und innerhalb eines Gehäuses angeordnet ist, dadurch gekennzeichnet, daß das erste Bauteil die Form eines Stabes hat und an der Trommeleinheit befestigt ist, während das zweite Bauteil von der Basis des Gehäuses gehalten ist.

9. Schwingungsdämpfungsvorrichtung nach Anspruch 8, dadurch gekennzeichnet, daß der Stab mittels einer elastischen Klemmeinrichtung in solcher Weise an der Trommeleinheit befestigt ist, daß er in einem begrenzten Ausmaß in allen Richtungen relativ zu der Trommeleinheit verschwenkbar ist.

10. Schwingungsdämpfungsvorrichtung nach Anspruch 9, dadurch gekennzeichnet, daß das zweite Bauteil von der Basis des Waschmaschinengehäuses ebenfalls so gehalten ist, daß es in einem bestimmten Maß allseitig bewegbar ist.

11. Schwingungsdämpfungsvorrichtung nach Anspruch 10, dadurch gekennzeichnet, daß das zweite Tragbauteil auf der Basis des Waschmaschinengehäuses mittels einer kugelförmigen Sitzfläche gehalten ist.

12. Waschmaschine mit einer Schwingungsdämpfungsvorrichtung nach einem der vorhergehenden Ansprüche.

13. Waschmaschine mit einer Schwingungsdämpfungsvorrichtung nach Anspruch 1 zum Dämpfen von Schwingungen zwischen einem drehbaren Bauteil (1) und einem dafür angeordneten Traggestell (0) mit einem ersten Bauteil (15), das mit dem drehbaren Bauteil verbunden ist, und einem zweiten Bauteil (17), das mit dem Traggestell verbunden ist und im Reibungseingriff mit dem ersten Bauteil steht, einem dritten Bauteil (18), das durch Reibung von dem ersten Bauteil gehalten ist, und mit einer Anschlageinrichtung (21, 22), die das Bewegungsmaß des dritten Bauteils gegenüber dem Traggestell begrenzt, wobei das zweite Bauteil so eingerichtet ist, daß es nur eine relativ geringe Reibungskraft auf das erste Bauteil überträgt, so daß kleine Schwingungen des Körpers nicht im signifikanten Ausmaß auf das Traggestell übertragen werden, während die von dem dritten Bauteil übertragene Reibungskraft wesentlich größer ist, um eine wirkungsvolle Dämpfung von großen Schwingungen sicher zu stellen, dadurch gekennzeichnet, daß das drehbare Bauteil elastisch von einer oder mehreren Blattfedern (16) abgestützt ist, wobei wenigstens eine der Blattfedern die Form einer C-förmigen Feder hat, von der ein Ende verlängert ist, um das erste Bauteil der Schwingungsdämpfungsvorrichtung zu bilden.

**Revendications**

1. Arrangement d'amortissement des oscillations entre deux corps mobiles l'un par rapport à l'autre (0,1), dans lequel les corps sont associés à des organes qui ont des surfaces de friction qui coopèrent mutuellement de manière que petits déplacements des corps soient amortis faiblement et que leurs grands déplacements soient amortis d'une manière plus importante, et dans lequel un premier organe associé à l'un des corps

**0 042 708**

est une barre ou une tige passant dans un second organe associé à l'autre corps afin qu'un amortissement faible soit assuré, et dans lequel un troisième organe est supporté en coopération par friction avec l'un des deux organes afin qu'il puisse se déplacer avec lui, le troisième organe ayant un degré de déplacement limité par des butées portées par l'autre des deux organes, si bien qu'il assure alors un amortissement important, l'arrangement étant caractérisé en ce que le second organe (5) est sous forme d'un élément unique formé en une seule pièce et comprenant deux parois parallèles distinctes (12) ayant des ouvertures et reliées par une troisième paroi, le premier organe passe par les ouvertures des parois distantes (11, 12) de manière sa surface soit en contact avec friction et assure l'amortissement faible, et le troisième organe (6) est sous forme d'un collier supporté par le premier organe (3) et mobile avec celui-ci entre les parois distantes du second organe, ce dernier constituant les butées qui limitent le déplacement du second organe, la coopération par friction du troisième organe et du premier organe assurant l'amortissement important.

2. Arrangement selon la revendication 1, dans lequel l'un des corps comporte un organe rotatif (1) et l'autre est constitué par un support (0) de cet organe.

3. Arrangement selon la revendication 2, dans lequel le second organe est destiné à exercer une force de frottement relativement faible sur le premier organe, si bien que les petites oscillations du corps ne sont pas transmises de manière importante au support alors que la force de frottement exercée par le troisième organe est nettement plus élevée de manière qu'elle assure un amortissement efficace des oscillations importantes.

4. Arrangement selon l'une quelconque des revendications précédentes, dans lequel un ou plusieurs patins d'absorption de choc (X, Y) sont placés entre le troisième organe et les butées de manière que les chocs et en conséquence le bruit soient réduits dans le cas des grandes oscillations.

5. Arrangement selon l'une quelconque des revendications précédentes, dans lequel un dispositif est destiné à régler la force de frottement exercée sur le premier organe par le second et/ou le troisième organe.

6. Arrangement selon l'une quelconque des revendications précédentes, dans lequel le troisième organe est sous forme d'un collier supporté par la barre ou la tige par friction.

7. Arrangement selon l'une quelconque des revendications précédentes, dans lequel le second organe est sous forme d'une structure analogue à une boîte creuse ayant des saillies dépassant vers l'extérieur sur deux parois opposées, le premier organe passant à travers les parois, celles-ci formant les parties distances l'une de l'autre.

8. Arrangement selon l'une des revendications 6 et 7 destiné à une machine à laver ayant un ensemble à tambour qui comporte un tambour perforé monté afin qu'il tourne autour d'un axe d'orientation générale horizontale, dans un récipient externe, et monté dans un coffret, dans lequel le premier organe est sous forme d'une tige fixée à l'ensemble à tambour et le second organe est supporté par la base du coffret.

9. Arrangement selon la revendication 8, dans lequel la tige est fixée à l'ensemble à tambour par un dispositif élastique de serrage d'une maniere qui permet le pivotement de la tige d'une quantité limitée dans toutes les directions par rapport à l'ensemble à tambour.

10. Arrangement selon la revendication 9, dans lequel le second organe est aussi supporté par la base du coffret de la machine à laver d'une manière qui permet un certain déplacement universel.

11. Arrangement selon la revendication 10, dans lequel le second organe de support est supporté par la base de la machine à laver par un siège sphérique.

12. Machine à laver comprenant un arrangement d'amortissement selon l'une quelconque des revendications précédentes.

13. Machine à laver comprenant un arrangement selon la revendication 1, destiné à amortir les oscillations entre un organe rotatif (1) et un support (0) de celui-ci, comprenant un premier organe (15) associé à l'organe rotatif et un second organe (17) associé au support et coopérant par friction avec le premier organe, un troisième organe (18) supporté par friction par le premier organe, et des butées (21, 22) limitant la course du troisième organe par rapport au support, dans laquelle le second organe est disposé afin qu'il n'exerce qu'une force de frottement relativement faible sur le premier organe, si bien que les petites oscillations du corps ne sont pas transmises de manière importante au support, alors que la force de frottement exercée par le troisième organe est nettement plus élevée de manière que cet organe assure un amortissement efficace des grandes oscillations, caractérisée en ce que l'organe rotatif est supporté élastiquement par un ou plusieurs ressorts à lame (16), l'un au moins des ressorts à lame ayant la forme d'un ressort en C dont une extrémité se prolonge afin qu'elle le forme le premier organe de l'arrangement d'amortissement.

FIG.1.

FIG. 2.

FIG.3.